# FASCICULE DE BREVET EUROPEEN

(11) **EP 2 773 522 B1**
(45) Date de publication et mention de la délivrance du brevet: **09.01.2019**
(21) Numéro de dépôt: 12780168.6
(22) Date de dépôt: 25.10.2012
(51) Int. Cl.: F25B 41/04, F25B 40/00, B60H 1/00, F25B 30/02

(54) **BOUCLE DE CLIMATISATION POUR UNE INSTALLATION DE CHAUFFAGE, VENTILATION ET/OU CLIMATISATION**
KLIMATISIERUNGSKREIS FÜR EINE HEIZUNGS-, BELÜFTUNGS-UND/ODER KLIMAANLAGE
AIR-CONDITIONING LOOP FOR A HEATING, VENTILATION AND/OR AIR-CONDITIONING SYSTEM

(30) Priorité: 03.11.2011 FR 1103334
(43) Date de publication de la demande: 10.09.2014
(73) Titulaire: Valeo Systèmes Thermiques, 78320 Le Mesnil-Saint-Denis (FR)
(72) Inventeur: YAHIA, Mohamed, 75005 Paris (FR); THUEZ, Jean-Luc, 78112 Fourqueux (FR)
(74) Mandataire: Metz, Gaëlle
(86) Numéro de dépôt international: PCT/EP2012/071126
(87) Numéro de publication internationale: WO 2013/064417

(56) Documents cités:
- DE-A1-102008 028 178
- FR-A1- 2 958 019
- US-A1- 2011 016 896

## Description

La présente invention concerne le domaine technique des boucles de climatisation à fluide frigorigène et à compresseur utilisées dans les installations de chauffage, ventilation et/ou climatisation d'un flux d'air intérieur destiné à être diffusé dans un habitacle, notamment, d'un véhicule automobile.

Dans le domaine des installations de chauffage, ventilation et/ou climatisation d'un flux d'air intérieur destiné à être diffusé dans un habitacle d'un véhicule, il est connu de mettre en oeuvre un groupe moto-ventilateur qui aspire un flux d'air pour l'insuffler dans une unité conditionnement d'air afin de générer un flux d'air intérieur traité thermiquement et dirigé vers l'intérieur de l'habitacle. La principale fonction de l'unité de conditionnement d'air est de conditionner le flux d'air intérieur à une température de consigne déterminée par un utilisateur du véhicule. À cet effet, l'unité de conditionnement comprend des moyens de chauffage, de déshumidification et/ou de refroidissement du flux d'air intérieur.

Dans le cas d'un véhicule à moteur thermique, de tels moyens sont le plus généralement formés, d'une part, par un radiateur raccordé au système de refroidissement du moteur thermique, pour le chauffage du flux d'air intérieur, et, d'autre part, par un évaporateur de la boucle de climatisation, pour la déshumidification et/ou le refroidissement du flux d'air intérieur.

Dans le cas d'un véhicule hybride ou complètement électrique, il n'est pas possible d'utiliser le circuit de refroidissement d'un moteur thermique en tant que source de chaleur.

Aussi, il a été proposé de mettre en oeuvre une installation de chauffage, ventilation et/ou climatisation adaptée pour avoir un mode de fonctionnement dit "refroidissement" et un mode de fonctionnement dit "pompe à chaleur". Le mode de fonctionnement dit "pompe à chaleur" permet, notamment, d'obtenir un rendement très supérieur à celui qui serait obtenu avec un radiateur électrique.

Une telle installation de chauffage, ventilation et/ou climatisation est réversible et est donc particulièrement adapté pour un véhicule dont la consommation énergétique doit être maîtrisée. Une telle boucle de climatisation est décrite dans la demande de brevet FR 2 954 463.

Selon la demande FR 2 954 463, l'installation de chauffage, ventilation et/ou climatisation comprend une unité de commande pilotant un compresseur intégré à une boucle de climatisation, dans laquelle circule un fluide frigorigène. La boucle de climatisation comprend au moins un condenseur, un évaporateur, et un échangeur de chaleur réversible, adapté pour fonctionner soit en évaporateur, soit en condenseur. La boucle de climatisation comprend également un distributeur multivoies piloté par l'unité de commande et adapté pour alimenter, sélectivement ou simultanément, l'évaporateur, le condenseur et l'échangeur de chaleur réversible. Le pilotage du distributeur multivoies permet d'obtenir divers modes de fonctionnement, notamment des modes de fonctionnement dit "refroidissement", dit "déshumidification" ou dit "pompe à chaleur".

Le document FR 2 958 019 divulgue une boucle de climatisation selon le préambule de la revendication 1.

Toutefois, un tel distributeur multivoies est un dispositif complexe et onéreux en raison, notamment, d'une part, du nombre de vannes multivoies qu'il comprend et, d'autre part, de la capacité de chacune des vannes à supporter une circulation du fluide frigorigène dans deux sens de circulation en induisant des pertes de charges réduites compatibles avec un fonctionnement correcte du boucle de climatisation.

Il est donc apparu un besoin d'une installation de chauffage, ventilation et/ou climatisation à fonctionnement réversible ayant une conception plus simple de manière à permettre une réduction du coût de fabrication.

Afin d'atteindre cet objectif, l'invention concerne une boucle de climatisation pour une installation de chauffage, ventilation et/ou climatisation, notamment pour un habitacle d'un véhicule automobile, dans laquelle circule un fluide frigorigène et comprenant au moins un compresseur, avantageusement piloté par une unité de commande, une canalisation principale de sortie disposée aval du compresseur, une canalisation principale de retour disposée en amont du compresseur, un condenseur, un évaporateur, un échangeur de chaleur réversible, préférentiellement adapté pour fonctionner soit en évaporateur, soit en condenseur, et des moyens de distribution, avantageusement pilotés par l'unité de commande, adaptés pour alimenter, sélectivement ou simultanément, le l'évaporateur et/ou l'échangeur de chaleur réversible.

Selon l'invention, les moyens de distribution comprennent au moins une canalisation de circulation de fluide frigorigène commandée par une vanne de commande, avantageusement du type monovoie et pilotée par l'unité de commande, adaptée pour être parcourue par le fluide frigorigène dans un seul sens de circulation.

La réalisation des moyens de distribution sous la forme de canalisations de circulation de fluide frigorigène commandées chacune par une vanne de type monovoie et monodirectionnelle ou unidirectionnelle permet de réaliser simplement les mêmes fonctions qu'un distributeur multivoies en utilisant des composants peu onéreux.

Selon une forme préférée de réalisation de l'invention, le compresseur, via la canalisation principale de sortie, est raccordé directement au condenseur. Par "directement", il faut entendre que la canalisation principale de sortie est raccordée au condenseur par une simple canalisation ou conduite ne comprenant ni composant ni raccordement d'une autre canalisation de la boucle de climatisation.

Selon une première variante de réalisation, les moyens de distribution comprennent, notamment en aval du condenseur :
- une première canalisation d'alimentation reliant la sortie du condenseur à une entrée de l'évaporateur et commandée par une première vanne d'alimentation, préférentiellement du type monovoie et pilotée par l'unité de commande, adaptée pour être parcourue par le fluide frigorigène uniquement en direction de l'évaporateur.

Selon l'invention, les moyens de distribution comprennent, notamment en aval du condenseur :
- une première canalisation de raccordement reliant la sortie du condenseur à l'échangeur de chaleur réversible et commandée par une deuxième vanne d'alimentation, préférentiellement du type monovoie et pilotée par l'unité de commande, adaptée pour être parcourue par le fluide frigorigène uniquement en direction de l'échangeur de chaleur réversible.

Selon une troisième variante de réalisation, les moyens de distribution comprennent, notamment en aval du condenseur :
- une deuxième canalisation de raccordement reliant l'échangeur de chaleur réversible à une sortie de l'évaporateur et commandée par une troisième vanne d'alimentation, préférentiellement du type monovoie et pilotée par l'unité de commande, adaptée pour être parcourue par le fluide frigorigène uniquement en direction de l'échangeur de chaleur réversible.

Selon une variante de la troisième variante de réalisation, la boucle de climatisation comprend une canalisation d'alimentation auxiliaire reliant la deuxième canalisation de raccordement, avantageusement en aval de la troisième vanne d'alimentation, à la première canalisation d'alimentation, avantageusement en aval de la première vanne d'alimentation. De plus, préférentiellement, la canalisation d'alimentation auxiliaire est commandée par un clapet anti-retour autorisant une circulation du fluide frigorigène en direction de l'évaporateur.

Selon une autre variante de la troisième variante de réalisation, la deuxième canalisation de raccordement comprend un module de détente/by-pass, notamment raccordé directement à l'échangeur de chaleur réversible, adapté pour d'assurer, d'une part, une détente du fluide frigorigène circulant en direction de l'échangeur de chaleur réversible et, d'autre part, une libre circulation du fluide frigorigène en provenance de l'échangeur de chaleur réversible.

Selon caractéristique de cette variante, le module de détente/by-pass comprend un détenteur unidirectionnel adapté pour assurer une détente du fluide frigorigène circulant en direction de l'échangeur de chaleur réversible à une valeur de pression variable, préférentiellement contrôlée par l'unité de commande. Un tel détendeur unidirectionnel est un composant peu onéreux. Selon une autre variante de la troisième variante de réalisation, la boucle de climatisation comprend un échangeur de chaleur interne disposé entre la canalisation principale de retour et la deuxième canalisation de raccordement.

Selon l'invention, les moyens de distribution comprennent, notamment en aval du condenseur :
- une première canalisation de retour reliant la première canalisation de raccordement à la canalisation principale de retour et commandée par une première vanne de retour, préférentiellement du type monovoie et pilotée par l'unité de commande, adaptée pour être parcourue par le fluide frigorigène uniquement en direction de la canalisation principale de retour.

Selon une cinquième variante de réalisation, les moyens de distribution comprennent, notamment en aval du condenseur :
- une deuxième canalisation de retour reliant la sortie de l'évaporateur à la canalisation principale de retour et commandée par une deuxième vanne de retour, préférentiellement du type monovoie et pilotée par l'unité de commande, adaptée pour être parcourue par le fluide frigorigène uniquement en direction de la canalisation principale de retour.

Selon une variante de la présente invention, la boucle de climatisation comprend sur la canalisation principale de retour un réservoir de fluide frigorigène.

Selon une variante de la présente invention, la boucle de climatisation comprend des moyens de détente unidirectionnels situés directement en amont de l'évaporateur. Par "directement", il faut entendre que les moyens de détente sont raccordés à l'évaporateur par une simple canalisation ou conduite ne comprenant ni composant ni raccordement d'une autre canalisation de la boucle de climatisation.

Selon une caractéristique de cette variante, les moyens de détente sont adaptés pour assurer une détente du fluide frigorigène à une valeur variable contrôlée par l'unité de commande

Selon une variante de la présente invention, l'unité de commande est adaptée pour que, lors du fonctionnement de la boucle de climatisation, le fluide frigorigène circule au moins dans le condenseur et dans l'évaporateur

Selon une autre variante de la présente invention, la première vanne d'alimentation et la deuxième vanne d'alimentation soient toujours dans des états opposés lors du fonctionnement de la boucle de climatisation. Par "états opposés", il faut entendre que lorsque la première vanne d'alimentation est ouverte alors la deuxième vanne d'alimentation est fermée, et réciproquement.

Selon une autre variante de la présente invention, la deuxième vanne d'alimentation et la troisième vanne d'alimentation ne sont jamais ouvertes en même temps.

Selon une autre variante des première à cinquième variantes de réalisation de la présente invention, l'unité de commande est adaptée pour pour agencer la boucle de climatisation selon au moins :
- un mode dit "refroidissement", dans lequel l'unité de commande gère :
   - l'ouverture de la deuxième vanne d'alimentation et de la deuxième vanne de retour,
   - la fermeture des première et troisième vannes d'alimentation et de la première vanne de retour,
- et/ou un mode dit "déshumidification", dans lequel l'unité de commande gère :
   - l'ouverture des première et troisième vannes d'alimentation et des première et deuxième vannes de retour,
   - la fermeture de la deuxième vanne d'alimentation,
- et/ou un mode dit "pompe à chaleur" dans lequel l'unité de commande gère :
   - l'ouverture des première et troisième vannes d'alimentation et de la première vanne de retour,
   - la fermeture de la deuxième vanne d'alimentation et de la deuxième vanne de retour,
- et/ou un mode dit " récupération " dans lequel l'unité de commande gère :
   - l'ouverture de la première vanne d'alimentation et de la deuxième vanne de retour,
   - la fermeture des deuxième et troisième vannes d'alimentation et de la première vanne de retour.

Bien entendu, les différentes caractéristiques, variantes et formes de réalisation de la présente invention peuvent être associées les unes avec les autres selon diverses combinaisons dans la mesure où elles ne sont pas incompatibles ou exclusives les unes des autres.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles :
- La figure 1 est une vue schématique d'un boîtier de conditionnement de d'un flux d'air intérieur d'un habitacle de véhicule,
- La figure 2 est une vue schématique de principe d'une boucle de climatisation associée au boîtier de conditionnement de la figure 1.
- La figure 3 est une vue schématique illustrant un mode de fonctionnement dit "refroidissement" de la boucle de climatisation de la figure 2.
- La figure 4 est une vue schématique illustrant un mode de fonctionnement dit "pompe à chaleur" de la boucle de climatisation de la figure 2.
- La figure 5 est une vue schématique illustrant un mode de fonctionnement dit "déshumidification" de la boucle de climatisation de la figure 2.
- La figure 6 est une vue schématique illustrant un mode de fonctionnement dit "récupération" du boucle de climatisation illustré à la figure 2.

Il est à noter que, sur les figures, les éléments structurels et/ou fonctionnels communs aux différents modes de réalisation peuvent présenter les mêmes références. Ainsi, sauf mention contraire, ces éléments disposent de propriétés structurelles, dimensionnelles et matérielles identiques.

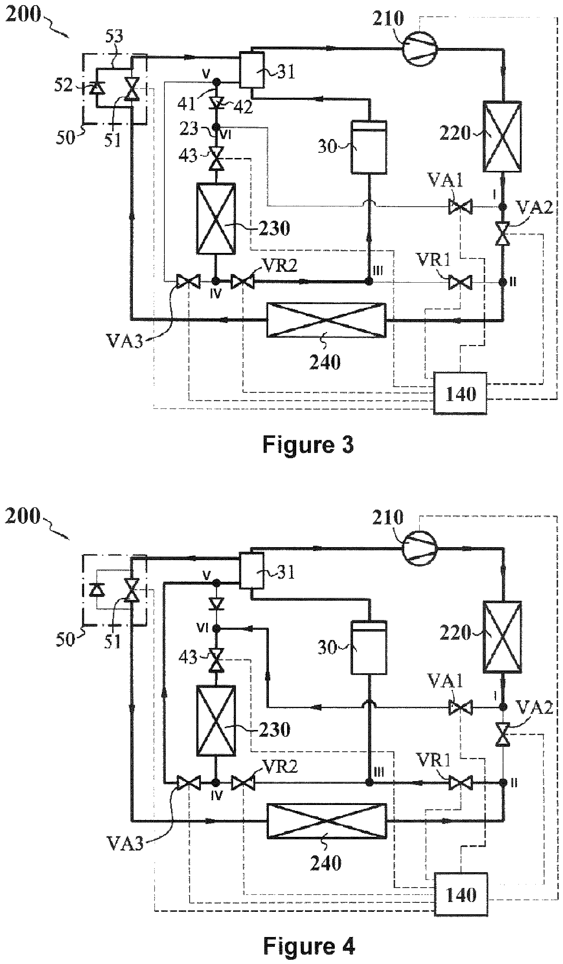

De plus, sur les figures 3 à 6, les canalisations, dans lesquelles se produit une circulation du fluide frigorigène, sont représentées en traits gras, tandis que le sens de circulation du fluide frigorigène y est indiqué par des flèches attachées aux canalisations en traits gras. Par ailleurs, les canalisations, dans lesquelles ne se produit aucune circulation du fluide frigorigène, sont représentées en traits fins.

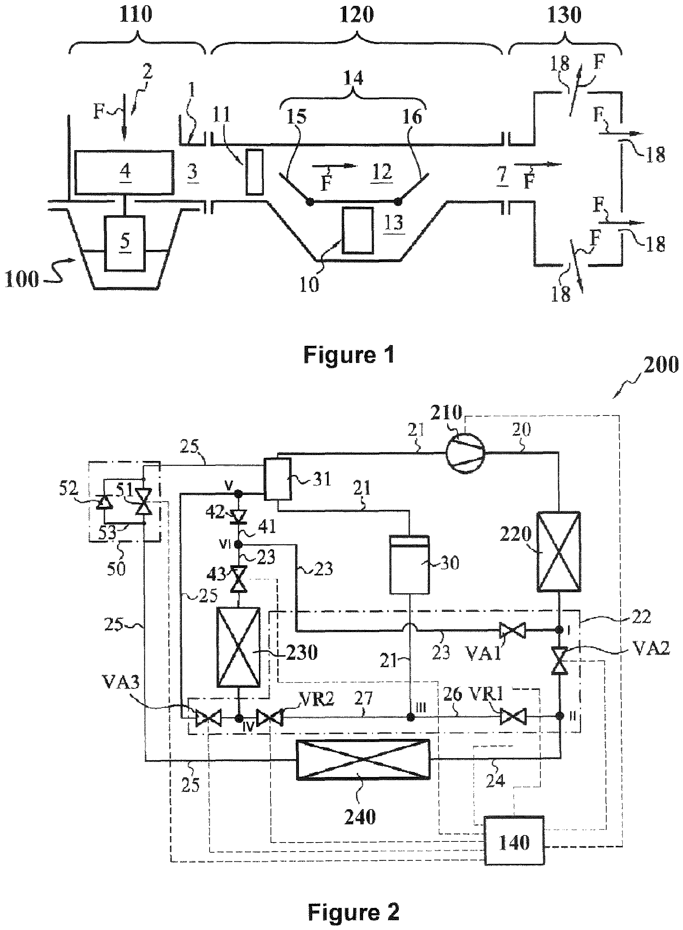

La figure 1 est une vue schématique d'un boîtier de conditionnement 100 pour le traitement thermique d'un flux d'air intérieur destiné à être diffusé dans un habitacle d'un véhicule. Le boîtier de conditionnement 100 comprend, dans le sens de circulation du flux d'air intérieur, indiqué par les flèches F, une unité de ventilation 110, une unité de traitement thermique 120 et une unité de distribution 130.

Selon l'exemple de réalisation de la figure 1, l'unité de ventilation 110 comprend un caisson de ventilation 1 comportant au moins une entrée d'air 2 et au moins une sortie d'air 3. Le caisson de ventilation 1 comporte une turbine 4, entraînée en rotation par un moteur électrique 5, pour la mise en circulation du flux d'air intérieur dans le boîtier de conditionnement 100.

La sortie d'air 3 de l'unité ventilation 110 est raccordée à une entrée de l'unité de traitement thermique 120. Par ailleurs, l'unité de traitement thermique 120 comprend une sortie d'air traité 7 raccordée à une entrée de l'unité de distribution 130.

Afin d'assurer la fonction de chauffage, l'unité de traitement thermique 120 comporte au moins un moyen de chauffage 10. Selon la présente invention, le moyen de chauffage 10 est constitué par un condenseur 220 agencé dans une boucle de climatisation 200, représentée à la figure 2. Bien entendu, les moyens de chauffage 10 pourraient également comprendre un élément de chauffage électrique.

L'unité de traitement thermique 120 comprend également au moins un moyen de refroidissement 11. Selon la présente invention, le moyen de refroidissement 11 est constitué par un évaporateur 230 agencé dans la boucle de climatisation 200.

L'unité de traitement thermique 120 comprend encore des canaux de circulation 12 et 13 du flux d'air intérieur, dont l'ouverture et la fermeture sont commandées par au moins un moyen de mixage 14, en particulier réalisé sous la forme de deux volets 15 et 16. Le moyen de mixage 14 est commandé en fonction du traitement thermique du flux d'air intérieur désiré.

Avantageusement, un premier canal de circulation de l'air 12, dit "canal d'air froid", est un canal permettant la circulation du flux d'air intérieur issu directement de l'évaporateur 230, sans être chauffé. Un deuxième canal de circulation de l'air 13, dit "canal d'air chaud", est un canal permettant la circulation du flux d'air intérieur issu de l'évaporateur 230 à travers le condenseur 220 afin d'y être réchauffé. Par suite, le premier canal de circulation de l'air 12 et le deuxième canal de circulation de l'air 13 sont regroupés afin de définir le flux d'air intérieur à température désirée destiné à être diffusé dans l'habitacle du véhicule.

En sortie de l'unité de traitement thermique 120, est agencée l'unité de distribution 130 comprenant au moins une sortie d'air 18, avantageusement plusieurs sorties d'air 18, destinée à alimenter différentes bouches de diffusion d'air de l'habitacle du véhicule. La sortie d'air 18 est associée à un volet de distribution, non représenté, piloté en fonction des commandes de l'utilisateur du véhicule.

Le mode de réalisation d'un tel boîtier de conditionnement 100 est bien connu de l'homme du métier et ne nécessite donc pas ici de plus amples explications.

L'invention se rapporte plus particulièrement à la boucle de climatisation 200, présentée à la figure 2 dans une vue schématique de principe, et associée au boîtier de conditionnement 100 de la figure 1.

Selon la présente invention, les termes "aval" et "amont" qualifient la position d'un composant par rapport à un autre, selon le sens de circulation de fluide frigorigène dans la boucle de climatisation 200.

De plus, selon la présente invention, les termes "ouvert(e)" et "fermé(e)" qualifient l'état d'une vanne permettant, respectivement, d'autoriser un passage de fluide frigorigène et de bloquer un passage de fluide frigorigène.

La boucle de climatisation 200 comprend un compresseur 210 assurant la circulation et la compression d'un fluide frigorigène circulant dans la boucle de climatisation 200. Le compresseur 210 est avantageusement piloté par une unité de commande 140.

Le fluide frigorigène circulant dans la boucle de climatisation 200 peut-être de toute nature appropriée. Par exemple, le fluide frigorigène peut être un fluide super-critique, tel que du dioxyde de carbone connu sous la dénomination R744. Néanmoins, le fluide frigorigène peut être un fluide sous-critique, tel que qu'un hydrofluorocarbone, par exemple le fluide frigorigène connu sous la dénomination R134a, ou un fluide frigorigène à faible impact environnemental, par exemple le fluide réfrigérant connu sous la dénomination R1234yf, ou encore un hydrocarbure halogéné ou un mélange d'hydrocarbures halogénés.

En sortie du compresseur 210, le fluide frigorigène circule à travers le condenseur 220, un échangeur de chaleur réversible 240 et l'évaporateur 230. L'échangeur de chaleur réversible 240 est apte à fonctionner soit en tant qu'évaporateur, soit en tant que condenseur, selon le mode de fonctionnement de la boucle de climatisation 200.

L'échangeur de chaleur réversible 240 est traversé par un flux d'air extérieur circulant dans un milieu extérieur. Le flux d'air extérieur n'est pas destiné à être diffusé dans l'habitacle. L'échangeur de chaleur réversible 240 permet de rejeter de la chaleur ou de prélever de la chaleur au flux d'air extérieur.

Le condenseur 220 et l'évaporateur 230 sont traversés par le flux d'air intérieur destiné à être diffusé dans l'habitacle. Le condenseur 220 et l'évaporateur 230 permettent de rejeter de la chaleur ou de prélever de la chaleur au flux d'air intérieur.

L'échangeur de chaleur réversible 240 est donc qualifié d'échangeur de chaleur "extérieur". Par opposition, le condenseur 220 et l'évaporateur 230 sont qualifiés d'échangeurs de chaleur "intérieurs".

En amont du compresseur 210, selon le sens de circulation de fluide frigorigène dans la boucle de climatisation 200, est disposée une canalisation principale de retour 21 connectée directement à l'entrée du compresseur 210. En aval, du compresseur 210, selon le sens de circulation de fluide frigorigène dans la boucle de climatisation 200, est disposée une canalisation principale de sortie 20.

Afin de permettre un fonctionnement réversible, la boucle de climatisation 200 comprend des moyens de commutation 22, avantageusement pilotés par l'unité de commande 140. Les moyens de commutation 22 permettent de définir la circulation du fluide du frigorigène, sélectivement ou simultanément, à travers l'évaporateur 230, le condenseur 220 et/ou l'échangeur de chaleur réversible 240, en fonction des divers modes de fonctionnement.

Selon l'exemple illustré, le condenseur 220 est raccordé directement au compresseur 210 par la canalisation principale de sortie 20, de sorte que le fluide frigorigène issu du compresseur 210 traverse directement le condenseur 220. Les moyens de distribution 22 sont donc situés en aval du condenseur 220, selon le sens de circulation de fluide frigorigène dans la boucle de climatisation 200.

Les moyens de distribution 22 comprennent une première canalisation d'alimentation 23 reliant la sortie du condenseur 220, notamment un premier point de connexion I disposé en sortie du condenseur 220, à une entrée de l'évaporateur 230. La première canalisation d'alimentation 23 est commandée par une première vanne d'alimentation VA1. La première vanne d'alimentation VA1 est du type monovoie adaptée pour être parcourue par le fluide frigorigène uniquement en direction de l'évaporateur 230. La première vanne d'alimentation VA1 est pilotée par l'unité de commande 140.

Les moyens de distribution 22 comprennent également une première canalisation de raccordement 24 reliant la sortie du condenseur 220, par exemple le premier point de connexion I, à l'échangeur de chaleur réversible 240. La première canalisation de raccordement 24 est commandée par une deuxième vanne d'alimentation VA2. La deuxième vanne d'alimentation VA2 est du type monovoie adaptée pour être parcourue par le fluide frigorigène uniquement en direction de l'échangeur de chaleur réversible 240. La deuxième vanne d'alimentation VA2 est pilotée par l'unité de commande 140. La première canalisation de raccordement 24 se trouve, d'un point de vue fluidique, en parallèle avec la première canalisation d'alimentation 23.

Les moyens de distribution 22 comprennent aussi une deuxième canalisation de raccordement 25 reliant l'échangeur de chaleur réversible 240 à une sortie de l'évaporateur 230. La deuxième canalisation de raccordement 25 est commandée par une troisième vanne d'alimentation VA3. La troisième vanne d'alimentation VA3 est du type monovoie adaptée pour être parcourue par le fluide frigorigène uniquement en direction de l'échangeur de chaleur réversible 240. La troisième vanne d'alimentation VA3 est pilotée par l'unité de commande 140.

Les moyens de distribution 22 comprennent également une première canalisation de retour 26 reliant un deuxième point de connexion II de la première canalisation de raccordement 24, disposé entre la deuxième vanne d'alimentation VA2 et l'échangeur de chaleur réversible 240, et un troisième point de connexion III de la canalisation principale de retour 21. La première canalisation de retour 26 est commandée par une première vanne de retour VR1. La première vanne de retour VR1 est du type monovoie adaptée pour être parcourue par le fluide frigorigène uniquement en direction de la canalisation principale de retour 21. La première vanne de retour VR1 est pilotée par l'unité de commande 140.

Les moyens de distribution 22 comprennent aussi une deuxième canalisation de retour 27 reliant un quatrième point de connexion IV de la deuxième canalisation de raccordement 25, disposé entre la sortie de l'évaporateur 230 et la troisième vanne d'alimentation VA3, au troisième point de connexion III de la canalisation principale de retour 21. La deuxième canalisation de retour 27 est commandée par une deuxième vanne de retour VR2. La deuxième vanne de retour VR2 est du type monovoie adaptée pour être parcourue par le fluide frigorigène uniquement en direction de la canalisation principale de retour 21. La deuxième vanne de retour VR2 est pilotée par l'unité de commande 140.

La première vanne d'alimentation VA1, la deuxième vanne d'alimentation VA2, la troisième vanne d'alimentation VA3, la première vanne de retour VR1 et/ou la deuxième vanne de retour VR2 sont donc des vannes de commande de type monovoie et monodirectionnelle, c'est-à-dire parcourue par le fluide frigorigène dans un seul sens de circulation. De telles vannes présentent l'avantage d'être des organes de régulation peu onéreux.

La canalisation principale de sortie 20, la canalisation principale de retour 21, la première canalisation d'alimentation 23, la première canalisation de raccordement 24, la deuxième canalisation de raccordement 25, la première canalisation de retour 26 et la deuxième canalisation de retour 27 sont des canalisations de circulation de fluide frigorigène.

Afin de permettre à la boucle de climatisation 200 de contenir une variation de la quantité de fluide frigorigène circulante, la canalisation principale de retour 21 est équipée d'un réservoir 30 de fluide frigorigène.

Par ailleurs, afin d'optimiser le rendement de la boucle de climatisation 200, un échangeur de chaleur interne 31 est disposé entre la canalisation principale de retour 21 et la deuxième canalisation de raccordement 25. L'échangeur de chaleur interne 31 permet d'obtenir un échange thermique entre le fluide frigorigène à basse pression et le fluide frigorigène à haute pression. L'échangeur de chaleur interne 31 est situé sur la canalisation de retour principal 21 en aval du réservoir 30, selon le sens de circulation de fluide frigorigène dans la boucle de climatisation 200. De même, sur la deuxième canalisation de raccordement 25, l'échangeur de chaleur interne 31 est situé en aval de la troisième vanne d'alimentation VA3, selon le sens de circulation de fluide frigorigène dans la boucle de climatisation 200. Il est à noter qu'un tel échangeur de chaleur interne 31 n'est pas strictement nécessaire à la réalisation de la boucle de climatisation 200 selon l'invention. Toutefois, dans le cadre d'un fluide réfrigérant sur-critique, notamment un fluide du type R744, l'échangeur de chaleur interne 31 permet d'augmenter significativement le rendement de la boucle de climatisation 200.

Par ailleurs, la boucle de climatisation 200 comprend une canalisation d'alimentation auxiliaire 41 reliant un cinquième point de connexion V de la deuxième canalisation de raccordement 25, disposé entre l'échangeur de chaleur interne 31 et la troisième vanne d'alimentation VA3, et un sixième point de connexion VI de la première canalisation d'alimentation 23, disposé entre la première vanne d'alimentation VA1 et l'évaporateur 230. La canalisation d'alimentation auxiliaire 41 est commandée par un clapet anti-retour 42 autorisant une circulation du fluide frigorigène de la deuxième canalisation de raccordement 25 vers la canalisation d'alimentation 23 et interdisant une circulation de fluide frigorigène en sens inverse.

De plus, la boucle de climatisation 200 comprend un module de détente/by-pass 50 situé sur la deuxième canalisation de raccordement 25 et disposé entre l'échangeur de chaleur interne 31 et l'échangeur de chaleur réversible 240. Le module de détente/by-pass 50 est adapté pour assurer, d'une part, une détente du fluide frigorigène circulant en direction de l'échangeur de chaleur réversible 240 et, d'autre part, une circulation du fluide frigorigène en provenance de l'échangeur de chaleur réversible 240. À cet effet le module de détente/by-pass 50 comprend, d'une part, un détendeur unidirectionnel 51, avantageusement piloté par l'unité de commande 140, et, d'autre part, à un clapet anti-retour 52 monté en parallèle au détendeur unidirectionnel 51 sur une canalisation de contournement 53 du détendeur 51. Le clapet anti-retour 52 est monté de sorte à être passant pour le fluide frigorigène circulant en direction de l'échangeur de chaleur réversible 240 vers l'évaporateur 230. Le détendeur unidirectionnel 51 est adapté pour assurer une détente du fluide frigorigène circulant en direction de l'échangeur de chaleur réversible 240. Avantageusement, le détendeur unidirectionnel 51 permet une détente à une pression variable contrôlée par l'unité de commande 140.

Enfin, la boucle de climatisation 200 comprend des moyens de détente 43 situés directement en amont de l'évaporateur 230. Avantageusement, les moyens de détente 43 sont de type unidirectionnel. Plus particulièrement, les moyens de détente 43 sont donc situés entre le sixième point de connexion VI de la première canalisation d'alimentation 23 et l'évaporateur 230. Les moyens de détente unidirectionnels 43 peuvent être réalisés de toute manière appropriée, en particulier sous la forme d'un tube capillaire ou d'un orifice tube intégré à l'évaporateur 230. Selon l'exemple illustré, les moyens de détente comprennent un détendeur 43 contrôlé par l'unité de commande 140. Préférentiellement, le détendeur 43 est adapté pour assurer une détente du fluide frigorigène à une pression variable contrôlée par l'unité de commande 140

La boucle de climatisation 200 ainsi constituée est susceptible de travailler selon différents modes de fonctionnement selon la commande, par l'unité de commande 140, de la première vanne d'alimentation VA1, la deuxième vanne d'alimentation VA2, la troisième vanne d'alimentation VA3, la première vanne de retour VR1 et/ou la deuxième vanne de retour VR2.

La figure 3 est une vue schématique illustrant un mode de fonctionnement dit "refroidissement" de la boucle de climatisation 200 de la figure 2 dans lequel l'unité de commande 140 gère :
- la fermeture de la première vanne d'alimentation VA1, de la troisième vanne d'alimentation VA3 et de la première vanne de retour VR1, et
- l'ouverture de la deuxième vanne d'alimentation VA2 et de la deuxième vanne de retour VR2.

Le fonctionnement du compresseur 210 assure alors la circulation du fluide frigorigène dans le condenseur 220. En sortie du condenseur 220, le fluide frigorigène est dirigé, à travers la deuxième vanne d'alimentation VA2, vers l'échangeur de chaleur réversible 240 dans lequel le fluide frigorigène se refroidit. Après avoir traversé l'échangeur de chaleur réversible 240, le fluide frigorigène est dirigé vers l'évaporateur 230 après avoir traversé le clapet anti-retour 52 du module de détente/by-pass 50 et l'échangeur de chaleur interne 31. Le fluide frigorigène subit dans l'échangeur de chaleur interne 31 un sous-refroidissement, permettant d'augmenter l'efficacité de la boucle de climatisation 200 en permettant une réduction de la température du fluide frigorigène avant l'évaporateur 230. En sortie de l'échangeur de chaleur interne 31, le fluide frigorigène passe par la canalisation d'alimentation auxiliaire 41 vers l'évaporateur 230, à travers le clapet anti-retour 42 et les moyens de détente 43, permettant d'assurer une vaporisation du fluide frigorigène dans l'évaporateur 230.

Le mode de fonctionnement dit "refroidissement" permet le refroidissement du flux d'air intérieur à travers l'évaporateur 230, le condenseur 220 n'étant pas traversé par le flux d'air intérieur, le moyen de mixage 15 étant configuré en conséquence afin de bloquer le passage du flux d'air intérieur à travers le condenseur 220.

La figure 4 est une vue schématique illustrant un mode de fonctionnement dit "pompe à chaleur" de la boucle de climatisation 200 de la figure 2 dans lequel l'unité de commande 140 gère :
- la fermeture de la deuxième vanne d'alimentation VA2 et la deuxième vanne de retour VR2 et,
- l'ouverture de la première vanne d'alimentation VA1, de la troisième vanne d'alimentation VA3 et de la première vanne de retour VR1.

Le fonctionnement du compresseur 210 assure alors la circulation du fluide frigorigène dans le condenseur 220. En sortie du condenseur 220, le fluide frigorigène est dirigé, à travers la première vanne d'alimentation VA1, vers l'évaporateur 230, dans lequel le fluide frigorigène continue à se refroidir. Préférentiellement, les moyens de détente 43 sont alors complètement ouverts. Alternativement, les moyens de détente 43 assurent une première détente du fluide frigorigène en amont de l'évaporateur 230, l'évaporateur 230 fonctionnant alors à une pression intermédiaire. Après avoir traversé l'évaporateur 230, le fluide frigorigène est dirigé vers l'échangeur de chaleur réversible 240 après avoir traversé la troisième vanne d'alimentation VA3, l'échangeur de chaleur interne 31 et le détendeur unidirectionnel 51 du module de détente/by-pass 50.

Le détendeur unidirectionnel 51 du module de détente/by-pass 50 permet d'assurer une vaporisation du fluide frigorigène dans l'échangeur de chaleur réversible 240,

Dans le mode de fonctionnement dit "pompe à chaleur", le fluide frigorigène traverse le détendeur 51 pour y subir une détente et ne passe pas par le clapet anti-retour 52. A cet effet, le clapet anti-retour 52 se trouve dans un état bloqué. Notamment, l'état bloqué du clapet anti-retour 52 est obtenu du fait que la pression du fluide frigorigène en amont du module de détente/by-pass 50 est supérieure à la pression du fluide frigorigène en aval du module de détente/by-pass 50.

Après avoir traversé le détendeur 51, le fluide frigorigène passe dans l'échangeur de chaleur réversible 240 dans lequel il est vaporisé avant d'être dirigé vers le compresseur 210 en passant par le réservoir 30 et l'échangeur de chaleur interne 31.

Le mode de fonctionnement dit "pompe à chaleur" permet le chauffage du flux d'air intérieur à travers à la fois de l'évaporateur 230 et le condenseur 220, le moyen de mixage 15 étant configuré en conséquence afin de faire passer toute ou partie du flux d'air intérieur à travers le condenseur 220.

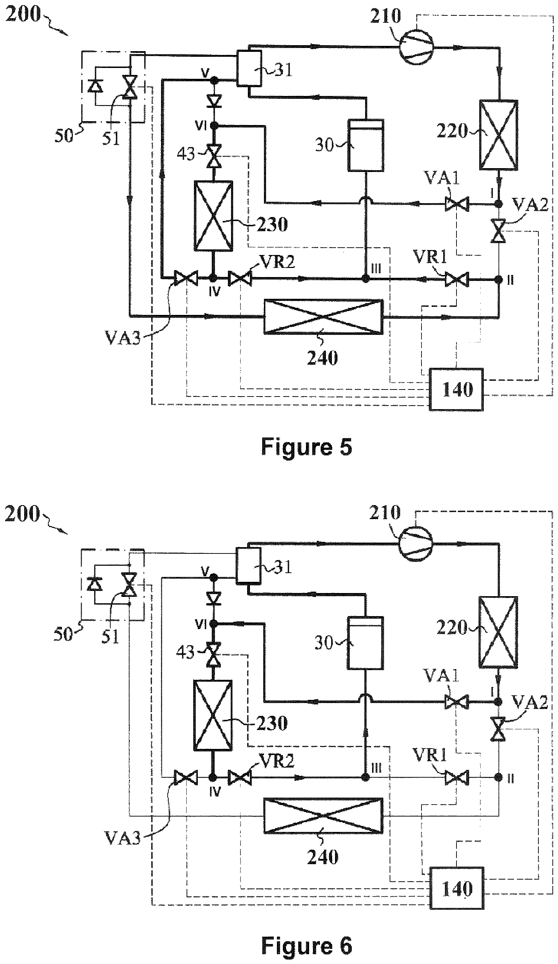

La figure 5 est une vue schématique illustrant un mode de fonctionnement dit "déshumidification" de la boucle de climatisation 200 de la figure 2 dans lequel l'unité de commande 140 gère :
- la fermeture de la deuxième vanne d'alimentation VA2 et,
- l'ouverture de la première vanne d'alimentation VA1, de la troisième vanne d'alimentation VA3, de la première vanne de retour VR1 et de la deuxième vanne de retour VR2.

Le fonctionnement du compresseur 210 assure alors la circulation du fluide frigorigène dans le condenseur 220. En sortie du condenseur 220, le fluide frigorigène est dirigé, à travers la première vanne d'alimentation VA1, vers l'évaporateur 230, de façon similaire au mode de fonctionnement dit "pompe à chaleur" de la figure 4. Après avoir traversé l'évaporateur 230, le fluide frigorigène est scindé en une première partie du fluide frigorigène retournant au compresseur 210, après avoir traversé la deuxième vanne de retour VR2, le réservoir 30 et l'échangeur de chaleur interne 31, et en une deuxième partie du fluide frigorigène se dirige vers l'échangeur de chaleur réversible 240, après avoir traversé la troisième vanne d'alimentation VA3, l'échangeur de chaleur interne 31 et le détendeur unidirectionnel 51 du module de détente/by-pass 50.

La première partie du fluide frigorigène et la deuxième partie du fluide frigorigène se rejoignent au niveau du troisième point de connexion III pour retourner au compresseur 210 en passant à travers le réservoir 30 et l'échangeur de chaleur interne 31.

Le mode de fonctionnement dit "déshumidification" de la boucle de climatisation 200 selon la figure 5 est mis en oeuvre lorsque le flux d'air intérieur, à une température supérieur à 0°C, doit être déshumidifié, c'est-à-dire refroidi puis réchauffé. Dans le mode de fonctionnement dit "déshumidification", l'évaporateur 230 assure une condensation de la vapeur d'eau contenue dans le flux d'air intérieur tandis que le condenseur 220 réchauffe le flux d'air, soit pour compenser le refroidissement induit par l'évaporateur 230, soit pour augmenter la température du flux d'air.

La figure 6 est une vue schématique illustrant un mode de fonctionnement dit "récupération" de la boucle de climatisation 200 illustrée à la figure 2, dans lequel l'unité de commande 140 gère :
- la fermeture de la deuxième vanne d'alimentation VA2, de la troisième vanne d'alimentation VA3 et de la première vanne de retour VR1, et
- l'ouverture de la première vanne d'alimentation VA1 et de la deuxième vanne de retour VR2.

Le fonctionnement du compresseur 210 assure alors la circulation du fluide frigorigène dans le condenseur 220 puis dans l'évaporateur 230 comme cela a été décrit en relation avec la figure 4 pour le mode de fonctionnement dit "pompe à chaleur". En sortie de l'évaporateur 230, l'intégralité du fluide frigorigène retourne au compresseur 210 en passant par le réservoir 30 et l'échangeur de chaleur interne 31 comme cela à été décrit en relation avec la figure 3 pour le mode de fonctionnement dit "refroidissement".

Il sera remarqué que dans tous les modes de fonctionnement décrits précédemment le fluide frigorigène circule toujours dans le condenseur 220 et l'évaporateur 230.

Dans le mode de fonctionnement dit "récupération", la chaleur est absorbée au niveau de l'évaporateur 230 et est restituée au niveau du condenseur 220. Préférentiellement, le système de ventilation fonctionne en recirculation totale, c'est alors que le flux d'air intérieur provient de l'habitacle et est refroidi puis réchauffé.

Selon la forme de réalisation du boucle de climatisation 200 illustrée dans les figures 2 à 6 et décrite précédemment, l'évaporateur 230, le condenseur 220 et l'échangeur de chaleur réversible 240 assurent un échange de chaleur entre le fluide frigorigène et le flux d'air intérieur, respectivement le flux d'air extérieur. Toutefois, selon la présente invention, l'évaporateur 230, le condenseur 220 ou l'échangeur de chaleur réversible 240 peut être adapté pour permettre un échange de chaleur entre le fluide frigorigène et un fluide caloporteur, autre que l'air, comme, par exemple, de l'eau glycolée ou de l'huile.

De plus, la présente invention a été décrite avec un condenseur 220 et un échangeur de chaleur réversible 240, notamment susceptible de fonctionner en tant que condenseur. Toutefois, dans le cadre de fluide sur-critique, le condenseur 220 et le échangeur de chaleur réversible 240 assure une fonction de refroidisseur de gaz. La présente invention couvre également un tel refroidisseur de gaz.

Par ailleurs, l'échangeur de chaleur réversible 240 peut être associé à un ou plusieurs échangeurs de circuits de refroidissement de l'unité de propulsion ou d'autres unités fonctionnelles du véhicule. Les échangeurs de circuits de refroidissement peuvent, notamment, former des sources de chaleurs complémentaires.

De même, l'échangeur de chaleur réversible 240 peut être associé à des ventilateurs forçant le passage du flux d'air extérieur au travers de l'échangeur de chaleur réversible 240.

Bien évidemment, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention et notamment toutes combinaisons des différents modes de fonctionnement de la boucle de climatisation selon l'invention dans le cadre des revendications annexées et décrits précédemment, pouvant être pris séparément ou en association.

## Revendications

1. Boucle de climatisation (200) pour une installation de chauffage, ventilation et/ou climatisation, notamment pour un habitacle d'un véhicule automobile, dans laquelle circule un fluide frigorigène et comprenant au moins un compresseur (210), une canalisation principale de sortie (20) disposée aval du compresseur (210), une canalisation principale de retour (21) disposée en amont du compresseur (210), un condenseur (220), un évaporateur (230), un échangeur de chaleur réversible (240), et des moyens de distribution (22) adaptés pour alimenter l'évaporateur (230) et/ou l'échangeur de chaleur réversible (240), les moyens de distribution (22) comprenant au moins une canalisation de circulation (23, 24, 25, 26, 27) de fluide frigorigène commandée par une vanne de commande (VA1, VA2, VA3, VR1, VR2) parcourue par le fluide frigorigène dans un seul sens de circulation, les moyens de distribution (22) comprenant une première canalisation de raccordement (24) reliant la sortie du condenseur (220) à l'échangeur de chaleur réversible (240) et qui est commandée par une deuxième vanne d'alimentation (VA2) parcourue par le fluide frigorigène uniquement en direction de l'échangeur de chaleur réversible (240), **caractérisée en ce que** les moyens de distribution (22) comprennent une première canalisation de retour (26) reliant la première canalisation de raccordement (24) à la canalisation principale de retour (21) et commandée par une première vanne de retour (VR1) parcourue par le fluide frigorigène uniquement en direction de la canalisation principale de retour (21).

2. Boucle de climatisation (200) selon la revendication 1, dans laquelle le compresseur (210) est raccordé directement au condenseur (220).

3. Boucle de climatisation (200) selon l'une quelconque des revendications précédentes, dans laquelle les moyens de distribution (22) comprennent :
- une première canalisation d'alimentation (23) reliant la sortie du condenseur (220) à une entrée de l'évaporateur (230) et commandée par une première vanne d'alimentation (VA1) parcourue par le fluide frigorigène uniquement en direction de l'évaporateur (230).

4. Boucle de climatisation (200) selon l'une quelconque des revendications précédentes, dans laquelle les moyens de distribution (22) comprennent en aval du condenseur (220) :
- une deuxième canalisation de raccordement (25) reliant l'échangeur de chaleur réversible (240) à une sortie de l'évaporateur (230) et commandée par une troisième vanne d'alimentation (VA3) parcourue par le fluide frigorigène uniquement en direction de l'échangeur de chaleur réversible (240).

5. Boucle de climatisation (200) selon l'une quelconque des revendications précédentes, dans laquelle les moyens de distribution (22) comprennent :
- une deuxième canalisation secondaire de retour (27) reliant la sortie de l'évaporateur (230) à la canalisation principale de retour (21) et commandée par une deuxième vanne de retour (VR2) parcourue par le fluide frigorigène uniquement en direction de la canalisation principale de retour (21).

6. Boucle de climatisation (200) selon les revendications 3 à 5, dans laquelle une unité de commande (140) est adaptée pour agencer la boucle de climatisation (200) selon au moins
- un mode dit "refroidissement", dans lequel :
• la deuxième vanne d'alimentation (VA2) et de la deuxième vanne de retour (VR2) sont ouvertes, et
• la première vanne d'alimentation (VA1), la troisième vanne d'alimentation (VA3) et la première vanne de retour (VR1) sont fermées,
- et/ou un mode dit "déshumidification", dans lequel :
• la première vanne d'alimentation (VA1), la troisième vanne d'alimentation (VA3), la première vanne de retour (VR1) et la deuxième vanne de retour (VR2) sont ouvertes, et
• la deuxième vanne d'alimentation (VA2) est fermée,
- et/ou un mode dit "pompe à chaleur", dans lequel :
• la première vanne d'alimentation (VA1), la troisième vanne d'alimentation (VA3) et la première vanne de retour (VR1) sont ouvertes, et
• la deuxième vanne d'alimentation (VA2) et la deuxième vanne de retour (VR2) sont fermées,
- et/ou un mode dit "récupération", dans lequel :
• la première vanne d'alimentation (VA1) et la deuxième vanne de retour (VR2) sont ouvertes, et
• la deuxième vanne d'alimentation (VA2), la troisième vanne d'alimentation (VA3) et la première vanne de retour (VR1) sont fermées.

7. Boucle de climatisation (200) selon les revendications 1 et 3, dans laquelle la deuxième vanne d'alimentation (VA2) et la troisième vanne d'alimentation (VA3) ne sont jamais ouvertes en même temps.

8. Boucle de climatisation (200) selon la revendication 3, dans laquelle la première vanne d'alimentation (VA1) et la deuxième vanne d'alimentation (VA2) sont toujours dans des états opposés lors du fonctionnement de la boucle de climatisation (200).

9. Boucle de climatisation (200) selon les revendications 1 et 3, **caractérisée en ce qu'**elle comprend une canalisation d'alimentation auxiliaire (41) reliant la deuxième canalisation de raccordement (25) à la première canalisation d'alimentation (23).

10. Boucle de climatisation (200) selon la revendication 9, dans laquelle la canalisation d'alimentation auxiliaire (41) est commandée par un clapet anti-retour (42) autorisant une circulation du fluide frigorigène en direction de l'évaporateur (230).

11. Boucle de climatisation (200) selon la revendication 4 et l'une quelconque des revendications 5 à 10, dans laquelle la deuxième canalisation de raccordement (25) comprend un module de détente/by-pass (50) apte à assurer, d'une part, une détente du fluide frigorigène circulant en direction de l'échangeur de chaleur réversible (240) et, d'autre part, une libre circulation du fluide frigorigène en provenance de l'échangeur de chaleur réversible (240).

12. Boucle de climatisation (200) selon la revendication 4 et l'une quelconque des revendications 5 à 11, dans laquelle la deuxième canalisation de raccordement (25) comprend un échangeur de chaleur interne (31).

## Patentansprüche

1. Klimatisierungskreis (200) für eine Heizungs-, Belüftungs- und/oder Klimaanlage, insbesondere für einen Innenraum eines Kraftfahrzeugs, in welchem ein Kältemittel zirkuliert und welches wenigstens einen Kompressor (210), eine stromabwärts des Kompressors (210) angeordnete Ausgangshauptleitung (20), eine stromaufwärts des Kompressors (210) angeordnete Hauptrücklaufleitung (21), einen Verflüssiger (220), einen Verdampfer (230), einen reversiblen Wärmetauscher (240) und Verteilungsmittel (22), die dafür ausgelegt sind, den Verdampfer (230) und/oder den reversiblen Wärmetauscher (240) zu speisen, umfasst, wobei die Verteilungsmittel (22) wenigstens eine Kältemittel-Zirkulationsleitung (23, 24, 25, 26, 27) umfassen, die von einem Steuerventil (VA1, VA2, VA3, VR1, VR2) gesteuert wird, das von dem Kältemittel in einer einzigen Strömungsrichtung durchströmt wird, wobei die Verteilungsmittel (22) eine erste Anschlussleitung (24) umfassen, die den Ausgang des Verflüssigers (220) mit dem reversiblen Wärmetauscher (240) verbindet und die von einem zweiten Zulaufventil (VA2) gesteuert wird, das von dem Kältemittel ausschließlich in Richtung des reversiblen Wärmetauschers (240) durchströmt wird, **dadurch gekennzeichnet, dass** die Verteilungsmittel (22) eine erste Rücklaufleitung (26) umfassen, welche die erste Anschlussleitung (24) mit der Hauptrücklaufleitung (21) verbindet und von einem ersten Rücklaufventil (VR1) gesteuert wird, das von dem Kältemittel ausschließlich in Richtung der Hauptrücklaufleitung (21) durchströmt wird.

2. Klimatisierungskreis (200) nach Anspruch 1, wobei der Kompressor (210) direkt an den Verflüssiger (220) angeschlossen ist.

3. Klimatisierungskreis (200) nach einem der vorhergehenden Ansprüche, wobei die Verteilungsmittel (22) umfassen:
- eine erste Zuführungsleitung (23), die den Ausgang des Verflüssigers (220) mit einem Eingang des Verdampfers (230) verbindet und von einem ersten Zulaufventil (VA1) gesteuert wird, das von dem Kältemittel ausschließlich in Richtung des Verdampfers (230) durchströmt wird.

4. Klimatisierungskreis (200) nach einem der vorhergehenden Ansprüche, wobei die Verteilungsmittel (22) stromabwärts des Verflüssigers (220) umfassen:
- eine zweite Anschlussleitung (25), die den reversiblen Wärmetauscher (240) mit einem Ausgang des Verdampfers (230) verbindet und von einem dritten Zulaufventil (VA3) gesteuert wird, das von dem Kältemittel ausschließlich in Richtung des reversiblen Wärmetauschers (240) durchströmt wird.

5. Klimatisierungskreis (200) nach einem der vorhergehenden Ansprüche, wobei die Verteilungsmittel (22) umfassen:
- eine zweite sekundäre Rücklaufleitung (27), die den Ausgang des Verdampfers (230) mit der Hauptrücklaufleitung (21) verbindet und von einem zweiten Rücklaufventil (VR2) gesteuert wird, das von dem Kältemittel ausschließlich in Richtung der Hauptrücklaufleitung (21) durchströmt wird.

6. Klimatisierungskreis (200) nach den Ansprüchen 3 bis 5, wobei eine Steuereinheit (140) dafür ausgelegt ist, den Klimatisierungskreis (200) einzurichten gemäß wenigstens
- einer sogenannten "Kühlbetriebsart", in welcher:
• das zweite Zulaufventil (VA2) und das zweite Rücklaufventil (VR2) geöffnet sind, und
• das erste Zulaufventil (VA1), das dritte Zulaufventil (VA3) und das erste Rücklaufventil (VR1) geschlossen sind,
- und/oder einer sogenannten "Entfeuchtungsbetriebsart", in welcher:
• das erste Zulaufventil (VA1), das dritte Zulaufventil (VA3), das erste Rücklaufventil (VR1) und das zweite Rücklaufventil (VR2) geöffnet sind, und
• das zweite Zulaufventil (VA2) geschlossen ist,
- und/oder einer sogenannten "Wärmepumpenbetriebsart", in welcher:
• das erste Zulaufventil (VA1), das dritte Zulaufventil (VA3) und das erste Rücklaufventil (VR1) geöffnet sind, und
• das zweite Zulaufventil (VA2) und das zweite Rücklaufventil (VR2) geschlossen sind,
- und/oder einer sogenannten "Rückgewinnungsbetriebsart", in welcher:
• das erste Zulaufventil (VA1) und das zweite Rücklaufventil (VR2) geöffnet sind, und
• das zweite Zulaufventil (VA2), das dritte Zulaufventil (VA3) und das erste Rücklaufventil (VR1) geschlossen sind.

7. Klimatisierungskreis (200) nach den Ansprüchen 1 bis 3, wobei das zweite Zulaufventil (VA2) und das dritte Zulaufventil (VA3) nie gleichzeitig geöffnet sind.

8. Klimatisierungskreis (200) nach Anspruch 3, wobei sich das erste Zulaufventil (VA1) und das zweite Zulaufventil (VA2) während des Betriebs des Klimatisierungskreises (200) stets in entgegengesetzten Zuständen befinden.

9. Klimatisierungskreis (200) nach den Ansprüchen 1 bis 3, **dadurch gekennzeichnet, dass** er eine Hilfszuführungsleitung (41) umfasst, welche die zweite Anschlussleitung (25) mit der ersten Zuführungsleitung (23) verbindet.

10. Klimatisierungskreis (200) nach Anspruch 9, wobei die Hilfszuführungsleitung (41) von einem Rückschlagventil (42) gesteuert wird, das eine Zirkulation des Kältemittels in Richtung des Verdampfers (230) ermöglicht.

11. Klimatisierungskreis (200) nach Anspruch 4 und einem der Ansprüche 5 bis 10, wobei die zweite Anschlussleitung (25) ein Expansions-/Bypassmodul (50) umfasst, das geeignet ist, einerseits eine Expansion des in Richtung des reversiblen Wärmetauschers (240) zirkulierenden Kältemittels und andererseits eine freie Zirkulation des von dem reversiblen Wärmetauscher (240) kommenden Kältemittels sicherzustellen.

12. Klimatisierungskreis (200) nach Anspruch 4 und einem der Ansprüche 5 bis 11, wobei die zweite Anschlussleitung (25) einen inneren Wärmetauscher (31) umfasst.

## Claims

1. Air conditioning loop (200) for a heating, ventilation and/or air conditioning installation, notably for a motor vehicle interior, through which there circulates a refrigerant fluid and which comprises at least one compressor (210), a main outlet pipe (20) arranged downstream of the compressor (210), a main return pipe (21) arranged upstream of the compressor (210), a condenser (220), an evaporator (230), a reversible heat exchanger (240), and distribution means (22) designed to feed the evaporator (230) and/or the reversible heat exchanger (240), the distribution means (22) comprising at least one refrigerant fluid circulation pipe (23, 24, 25, 26, 27) controlled by a control valve (VA1, VA2, VA3, VR1, VR2) through which the refrigerant fluid passes in only one direction of circulation, the distribution means (22) comprising a first connecting pipe (24) connecting the outlet of the condenser (220) to the reversible heat exchanger (240) and which is controlled by a second feed valve (VA2) through which the refrigerant fluid passes in only the direction of the reversible heat exchanger (240), **characterized in that** the distribution means (22) comprise a first return pipe (26) connecting the first connecting pipe (24) to the main return pipe (21) and controlled by a first return valve (VR1) through which the refrigerant fluid passes only in the direction of the main return pipe (21).

2. Air conditioning loop (200) according to Claim 1, in which the compressor (210) is connected directly to the condenser (220).

3. Air conditioning loop (200) according to either one of the preceding claims, in which the distribution means (22) comprise:
- a first feed pipe (23) connecting the outlet of the condenser (220) to an inlet of the evaporator (230) and controlled by a first feed valve (VA1) through which the refrigerant fluid passes only in the direction of the evaporator (230).

4. Air conditioning loop (200) according to any one of the preceding claims, in which the distribution means (22) comprise, downstream of the condenser (220) :
- a second connecting pipe (25) connecting the reversible heat exchanger (240) to an outlet of the evaporator (230) and controlled by a third feed valve (VA3) through which the refrigerant fluid passes only in the direction of the reversible heat exchanger (240).

5. Air conditioning loop (200) according to any one of the preceding claims, in which the distribution means (22) comprise:
- a secondary second return pipe (27) connecting the outlet of the evaporator (230) to the main return pipe (21) and controlled by a second return valve (VR2) through which the refrigerant fluid passes only in the direction of the main return pipe (21).

6. Air conditioning loop (200) according to Claims 3 to 5, in which a control unit (140) is designed to arrange the air conditioning loop (200) in at least
- a mode referred to as "cooling" mode, in which:
• the second feed valve (VA2) and the second return valve (VR2) are open, and
• the first feed valve (VA1), the third feed valve (VA3) and the first return valve (VR1) are closed,
- and/or a mode referred to as "dehumidification" mode, in which:
• the first feed valve (VA1), the third feed valve (VA3), the first return valve (VR1) and the second return valve (VR2) are open, and
• the second feed valve (VA2) is closed,
- and/or a mode referred to as "heat pump" mode, in which:
• the first feed valve (VA1), the third feed valve (VA3) and the first return valve (VR1) are open, and
• the second feed valve (VA2) and the second return valve (VR2) are closed,
- and/or a mode referred to as "recovery" mode, in which:
• the first feed valve (VA1) and the second return valve (VR2) are open, and
• the second feed valve (VA2), the third feed valve (VA3) and the first return valve (VR1) are closed.

7. Air conditioning loop (200) according to Claims 1 and 3, in which the second feed valve (VA2) and the third feed valve (VA3) are never open at the same time.

8. Air conditioning loop (200) according to Claim 3, in which the first feed valve (VA1) and the second feed valve (VA2) are always in opposite states when the air conditioning loop (200) is in operation.

9. Air conditioning loop (200) according to Claims 1 and 3, **characterized in that** it comprises an auxiliary feed pipe (41) connecting the second connecting pipe (25) to the first feed pipe (23).

10. Air conditioning loop (200) according to Claim 9, in which the auxiliary feed pipe (41) is controlled by a non-return valve (42) allowing the refrigerant fluid to circulate in the direction of the evaporator (230).

11. Air conditioning loop (200) according to Claim 4 and any one of Claims 5 to 10, in which the second connecting pipe (25) comprises an expansion/bypass module (50) able on the one hand to reduce the pressure of the refrigerant fluid circulating in the direction of the reversible heat exchanger (240) and, on the other hand, allow refrigerant fluid coming from the reversible heat exchanger (240) to circulate freely.

12. Air conditioning loop (200) according to Claim 4 and any one of Claims 5 to 11, in which the second connecting pipe (25) comprises an internal heat exchanger (31).
